# EUROPÄISCHE PATENTANMELDUNG

(11) **EP 2 768 278 A1**
(43) Veröffentlichungstag der Anmeldung: **20.08.2014**
(21) Anmeldenummer: 14151879.5
(22) Anmeldetag: 21.01.2014
(51) Int. Cl.: H05B 7/101

(54) **Verfahren zum Herstellen eines Elektrodenaufsatzes**

(30) Priorität: 14.02.2013 DE 102013101488
(71) Anmelder: Connex GmbH, 44532 Lünen (DE)
(72) Erfinder: Janßen, Martin, 44532 Lünen (DE)
(74) Vertreter: Griepenstroh, Jörg

(57) **Zusammenfassung**

Die vorliegende Erfindung betrifft ein Verfahren zum Herstellen eines Elektrodenaufsatzes (1), wobei der Elektrodenaufsatz insbesondere zur Aufnahme einer Graphitelektrode verwendet wird und das Verfahren gekennzeichnet wird durch folgende Verfahrensschritte
- Herstellen eines Sockelbauteils (3) und eines Aufsatzringes (2) aus einer Kupferlegierung, wobei der Aufsatzring (2) bevorzugt als zylindrisches Hohlbauteil ausgebildet wird und das Sockelbauteil (3) insbesondere als Hülsenbauteil mit gegenüber dem Hülsenbauteil abstehendem Kegel (4),
- Mechanisches Bearbeiten des Sockelbauteils (3) und des Aufsatzringes (2) zu einer gewünschten Sollgeometrie,
- Beschichten einer Innenmantelfläche (10) des Aufsatzringes (2) mit einer Silberlegierung, wobei das Beschichten durch ein thermisches Spritzverfahren durchgeführt wird,
- Spanabhebendes Bearbeiten der aufgespritzten Beschichtung (18) zu einer Sollgeometrie,
- Koppeln des Aufsatzringes (2) und des Sockelbauteils (3) mittels thermischem Fügen zu einem Elektrodenaufsatz (1),
- Galvanisches Oberflächenbeschichten des so hergestellten Elektrodenaufsatzes (1) mit einer Silberlegierung.

## Beschreibung

Die vorliegende Erfindung betrifft ein Verfahren zum Herstellen eines Elektrodenaufsatzes gemäß den Merkmalen im Oberbegriff von Patentanspruch 1.

Aus dem Stand der Technik ist es bekannt, in Reaktoren chemische Prozesse ablaufen zu lassen, um beispielsweise Energie zu erzeugen oder aber auch Rohstoffe oder chemische Elemente zu gewinnen. Aus der Siliziumherstellung ist es bekannt, innerhalb eines chemischen Reaktors Silizium von Elektroden zu ernten.

Die in einem Reaktor befindlichen Elektroden müssen dabei in elektrisch leitendem Kontakt mit einem außerhalb des Reaktorinnenbehälters erzeugten Strom stehen.

Hierzu sind aus dem Stand der Technik Elektrodenaufsätze bekannt, die beispielsweise in einen Reaktorboden eingebaut werden oder aber von unten in einen Reaktorboden eingeführt werden, wobei dann die Elektrode selber, beispielsweise eine Graphitelektrode, auf den Elektrodenaufsatz gesteckt wird. Der Reaktor wird dann betrieben und in zeitlichen Intervallen ist es möglich, beispielsweise bei der Siliziumgewinnung das Silizium von den Graphitelektroden zu ernten.

Der Elektrodenaufsatz muss dabei zwei unterschiedliche Anforderungen erfüllen. Zum einen muss der Elektrodenaufsatz aus einem elektrisch sehr gut leitbarem Werkstoff hergestellt sein, weshalb er üblicherweise aus einem Edelmetall, beispielsweise Gold oder aber Silber, hergestellt ist. Zum anderen muss der Elektrodenaufsatz über seinen Benutzungszeitraum und mitunter ein mehrfaches Auf- und Absetzten bzw. Wechseln von Elektroden einer hohen mechanischen Belastung standhalten. Ein Elektrodenhalter für Lichtbogenöfen ist beispielsweise aus der DE 31 44 437 A1 bekannt und ein Graphitelektrodenhalter für Elektroöfen aus der DE 37 91 004 T5.

Es ist daher Aufgabe der vorliegenden Erfindung, einen aus den Stand der Technik bekannten Elektrodenaufsatz dahingehend zu verbessern, dass er deutlich kostengünstiger produzierbar ist und in seiner mechanischen Widerstandsfähigkeit erhöht ist, bei annähernd gleichbleibender elektrischer Leitfähigkeit.

Die zuvor genannte Aufgabe wird erfindungsgemäß mit einem Herstellungsverfahren für einen Elektrodenaufsatz gemäß den Merkmalen im Patentanspruch 1 gelöst.

Vorteilhafte Ausführungsvarianten der vorliegenden Erfindung sind Gegenstand der abhängigen Patentansprüche.

Das Verfahren zum Herstellen eines Elektrodenaufsatzes, wobei der Elektrodenaufsatz insbesondere zur Aufnahme einer Graphitelektrode verwendet wird, ist erfindungsgemäß durch folgende Verfahrensschritte gekennzeichnet:
- Herstellen eines Sockelbauteils und eines Aufsatzringes aus einer Kupferlegierung, wobei der Aufsatzring bevorzugt als zylindrisches Hohlbauteil ausgebildet wird und das Sockelbauteil insbesondere als Hülsenbauteil mit gegenüber dem Hülsenbauteil abstehendem Kegel,
- Mechanisches Bearbeiten des Sockelbauteils und des Aufsatzringes zu einer gewünschten Sollgeometrie,
- Beschichten einer Innenmantelfläche des Aufsatzringes mit einer Silberlegierung, wobei das Beschichten durch ein thermisches Spritzverfahren durchgeführt wird,
- Spanabhebendes Bearbeiten der aufgespritzten Beschichtung zu einer Sollgeometrie,
- Koppeln des Aufsatzringes und des Sockelbauteils mittels thermischem Fügen zu einem Elektrodenaufsatz,
- Galvanisches Oberflächenbeschichten des so hergestellten Elektrodenaufsatzes mit einer Silberlegierung.

Erfindungsgemäß ist somit vorgesehen, dass der Elektrodenaufsatz nicht aus Gold oder Silber hergestellt ist, sondern aus dem im Vergleich zu den erstgenannten Edelmetallen kostengünstigeren Kupfer. Insbesondere wird hierbei eine SE-CU Kupferlegierung verwendet. Im Rahmen der Erfindung ist es jedoch auch denkbar, verschiedene andere Kupferlegierungen bei der Herstellung des Elektrodenaufsatzes zu verwenden. Der Aufsatzring wird dabei insbesondere an der Kontaktstelle zur Aufnahme der Graphitelektrode erfindungsgemäß mit einer Silberlegierung mittels eines thermischen Spritzverfahren beschichtet, wobei die so aufgebrauchte Beschichtung anschließend mechanisch nachbearbeitet wird. Das mechanische Nachbearbeiten erfolgt insbesondere ohne Kühlschmierstoff. Hierdurch wird eine geometrisch hochpräzise und gleichzeitig auch gegenüber reinem Silber verbesserte mechanische Widerstandsfähigkeit gegen abrasiven Verschleiß hergestellt, bei mindestens gleichbleibender elektrischer Leitfähigkeit im Übergangsbereich von dem Elektrodenaufsatz zu der auf diesen aufgesetzten Elektrode.

Durch das erfindungsgemäße Herstellungsverfahren, insbesondere das zunächst zweiteilige Herstellungsverfahren von Aufsatzring und Sockelbauteil, ist es möglich, in dem Aufsatzring die Aufnahmefläche, insbesondere die Innenmantelfläche des Aufsatzringes selber, durch das thermische Spritzverfahren mit einer besonders mechanisch hochfesten und elektrisch gut leitfähigen Beschichtung durch eine Silberlegierung zu versetzen. Insbesondere erfolgt dann nach dem Beschichten mittels thermischem Spritzverfahren ein spanabhebendes Bearbeiten der aufgespritzten Oberfläche zu einer Sollgeometrie, wobei insbesondere das spanabhebende Bearbeiten ohne Kühlschmierstoff erfolgt. Hierdurch wird vermieden, dass Kühlmittel in die poröse Oberfläche der Silberbeschichtung eindringt. Eingedrungenes Kühlmittel würde beim späteren Verschweißen zu einer Verpuffung führen, die das Silber absprengen würde, was jedoch erfindungsgemäß vermieden wird.

Aufgrund des getrennten Herstellungsverfahrens von Aufsatzring und Sockelbauteil ist es insbesondere möglich, den Aufsatzring erfindungsgemäß spanabhebend optimiert und kostensparend zu bearbeiten. Nachdem der Aufsatzring mit der ausgespritzten Silberlegierung entsprechend hergestellt ist, wird er mit dem Sockelbauteil zueinander ausgerichtet und positioniert, insbesondere formschlüssig gekoppelt, und anschließend durch thermisches Fügen zu einem Elektrodenaufsatz verschweißt. Durch die stoffschlüssige Verbindung des thermischen Fügens wird die Leitfähigkeit von einem unteren Bereich des Sockelbauteils bis hin zu der Innenmantelfläche des Aufsatzringes sichergestellt, zum anderen wird insbesondere ein zweiseitiger thermischer Fügevorgang derart durchgeführt, dass der zwischen Aufsatzring und Sockelbauteil befindliche minimale Hohlraum von außen nicht zugänglich ist und dann in dem später durchgeführten galvanischen Oberflächenbeschichtungsvorgang mit einer durchgehenden Oberflächenbeschichtung versehen wird, so dass kein in dem Elektrodenaufsatz selbst befindliches Kupfer mit dem Innenraum des Reaktors oder sonstigen Bauteilen in Kontakt kommt.

Da das Edelmetall Kupfer und mithin eine Kupferlegierung insbesondere dem Prozess der Siliziumgewinnung selbst schädlich entgegensteht, wird weiterhin das gesamte hergestellte Bauteil galvanisch oberflächenbeschichtet mit einer Silberlegierung. Das gesamte hergestellte Bauteil weist somit eine vollständige und geschlossene Oberflächenschicht aus der Silberlegierung auf, weshalb kein in dem Bauteil befindliches Kupfer in Oberflächenkontakt mit an dem Prozess beteiligten Bauteilen gelangt.

Im Rahmen der Erfindung ist es somit möglich, ein hochpräzises Bauteil kostengünstig herzustellen und dabei in seiner mechanischen Widerstandsfähigkeit gegenüber aus dem Stand der Technik bekannten Bauteilen deutlich zu verbessern, bei mindestens gleichbleibender elektrischer Leitfähigkeit.

Im Rahmen der Erfindung wird insbesondere die Beschichtung der Innenmantelfläche des Aufsatzringes durch ein thermisches Spritzverfahren mit einer Dicke von 0,5 bis 3 mm, insbesondere 1 bis 2,5 mm und bevorzugt von 1,2 bis 2 mm durchgeführt, wobei das Beschichten selbst mittels Flammspritzen, insbesondere mittels Plasmaspritzen, durchgeführt wird. Das Plasmaspritzen wird insbesondere ohne Vakuum-Atmosphäre durchgeführt, so dass durch den Luftsauerstoff sich Silberoxid bilden kann, welches härter und verschleißfester als reines Silber ist. Insbesondere wird durch den Spritzvorgang selbst eine hochfeste Oberflächenbeschichtung hergestellt, die gerade aufgrund der zweiteiligen Herstellungsweise des erfindungsgemäßen Elektrodenaufsatzes an die Innenmantelfläche des im Wesentlichen zylindrisch ausgebildeten Hohlbauteils aufgebracht wird.

Im Rahmen der Erfindung es darüber hinaus möglich, dass der Aufsatzring selbst zunächst mit einem Innenkegel versehen wird, so dass die Innenmanteloberfläche radial umlaufend in einem Winkel zu einer Mittellängsachse verläuft. Insbesondere wird die Innenmanteloberfläche selbst mit einer mittleren Rauheit vom 2 bis 4 µm, ganz besonders bevorzugt von 2,5 bis 3 µm hergestellt. Optional wird dann auf die derart hergestellte Innenmanteloberfläche insbesondere ein Haftgrund aufgebracht, der ganz besonders bevorzugt auf Basis von Aluminium und Nickel ausgebildet ist.

Das so vorbereitete Bauteil kann dann mit oder ohne Haftgrund mittels des thermischen Beschichtungsvorganges mit einer Beschichtung aus einer Silberlegierung beschichtet werden. Die so durch das thermische Spritzen aufgebrachte Beschichtung weist eine derart harte Oberflächenbeschaffenheit auf, dass ein spezielles Schneidwerkzeug verwendet werden muss, um anschließend die Beschichtung auf eine Sollgeometrie spanabhebend zu bearbeiten.

Insbesondere erfolgt das spanabhebende Bearbeiten der mittels thermischen Spritzen aufgebrachten Silberbeschichtung mit einem Schneidwerkzeug ohne den Einsatz von Kühlschmierstoff.

Der so auf Maß hergestellte Aufsatzring kann optional dann weiterhin insbesondere an seiner Außenmantelfläche beispielsweise durch ein spanabhebendes Verfahren bearbeitet werden, insbesondere wird ein Außenkegel aufgebracht.

Gleiches gilt für das Sockelbauteil, welches ebenfalls mit einem spanabhebenden Verfahren weiter bearbeitet sein kann, so dass das Sockelbauteil einen unteren Abschnitt bestehend aus einem Hülsenbauteil aufweist und einen sich an das Hülsenbauteil einstückig und werkstoffeinheitlich angliedernder Scheibenkörper, der wiederum gefolgt ist von einem gegenüber dem Scheibenkörper abstehenden Kegel. Auf den Scheibenkörper wird dann der Aufsatzring aufgesetzt, so dass sich der Kegel mittig zentriert mit einem Abstand zu der Innenmantelfläche befindet. In dem Hülsenbauteil selbst ist weiterhin bevorzugt ein Gewinde eingebracht, mit dem der Elektrodenaufsatz auf eine entsprechende Vorrichtung in dem Reaktor und/oder zum Einbringen in den Reaktor aufgesetzt ist.

Die zwei getrennt voneinander hergestellten Bauteile werden sodann derart zueinander ausgerichtet, dass sie insbesondere in formschlüssigem Kontakt stehen und dann durch ein thermisches Fügeverfahren miteinander gekoppelt werden. Insbesondere handelt es sich dabei um einen Schweißprozess, ganz besonders bevorzugt um einen Elektronenstrahlschweißprozess. Im Rahmen der Erfindung wäre es optional vorstellbar, dass auch die beiden Bauteile zusätzlich mit einer formschlüssigen Koppelung, beispielsweise mit einer Presspassung, miteinander gekoppelt werden, so dass ein aufwendiges Ausrichten während des Fügevorganges aufgrund der formschlüssigen Koppelung zunächst entfällt.

Das thermische Fügen wird insbesondere derart durchgeführt, dass zunächst eine erste Schweißnaht in einem Talbereich, welcher zwischen dem Kegel und dem Aufsatzring entsteht, radial umlaufend verschweißt wird. Insbesondere wird dabei eine Eindringtiefe der dabei entstehenden thermischen Fügenaht von bis zu 4 mm gegenüber der Oberfläche, ganz besonders bevorzugt von bis zu 2 mm und insbesondere von bis zu 1,1 mm realisiert. Somit wird zunächst durch den ersten thermischen Fügeprozess der Aufsatzring auf dem Sockelbauteil stoffschlüssig fest positioniert, bei einem gleichzeitigen Verschließen der an der Oberfläche entstehenden Trennstelle, welche zunächst nach dem formschlüssigen in Kontakt Bringen beider Bauteile vorhanden ist.

In einem dem ersten thermischen Fügen nachgeforderten zweiten thermischen Fügeschritt wird insbesondere an der Außenmantelfläche des Aufsatzringes sowie an dem Scheibenbauteil eine radial umlaufende zweite Schweißnaht erzeugt, wobei hier die Eindringtiefe der Schweißnaht von bis zu 40 mm, ganz besonders bevorzugt bis zu 30 mm insbesondere zwischen 20 und 10 mm realisiert wird. Insbesondere durch die zweite Schweißnaht wird der Aufsatzring stoffschlüssig und ganz besonders bevorzugt hochfest mit dem Sockelbauteil gekoppelt, so dass zum einen eine hinreichend mechanisch belastbare Verbindung, zum anderen ein elektrische gut leitende einstückig und werkstoffeinheitliche Koppelung gegeben ist.

Damit nunmehr von den bestehenden Kupferlegierungsoberflächen des Bauteils kein Kontakt mit dem Reaktor und/oder umliegenden Bauteilen insbesondere des Kupfers erfolgt, wird anschließend das gesamte Bauteil mit einem Oberflächenbeschichtungsverfahren mit einer Schichtdicke von 10 bis 300 µm, insbesondere zwischen 30 und 200 µm und besonders bevorzugt mit einer Schichtdicke von 50 bis 100 µm galvanisch oberflächenbeschichtet. Hierbei wird durch das galvanische Oberflächenbeschichten eine Oberfläche aus Silber oder einer Silberlegierung hergestellt. Durch diese Maßnahme wird erreicht, dass die gesamte Oberfläche des so hergestellten Elektrodenaufsatzes vollständig mit einer Silberoberfläche überzogen ist. Somit sind keine Oberflächenbestandteile aus reinem Kupfer, welche sich negativ auf die Prozessführung mit dem Elektrodenaufsatz auswirken würden.

Im Rahmen der Erfindung wird insbesondere auch das in den Hülsenabschnitt des Sockelbauteils geschnittene Gewinde durch die galvanische Beschichtung überzogen, so dass kein Kupfer in Kontakt mit der Atmosphäre mehr steht.

Weitere Vorteile, Merkmale, Eigenschaften und Aspekte der vorliegenden Erfindung sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine perspektivische Ansicht auf einen erfindungsgemäßen Elektrodenaufsatz,
- Figur 2: einen erfindungsgemäßen Elektrodenaufsatz in einer Seitenansicht,
- Figur 3a bis c: den Herstellungsprozess eines erfindungsgemäßen Aufsatzringes und
- Figur 4: eine Querschnittsansicht eines Sockelbauteils.

In den Figuren werden für gleiche oder ähnliche Bauteile dieselben Bezugszeichen verwendet, auch wenn eine wiederholte Beschreibung aus Vereinfachungsgründen entfällt.

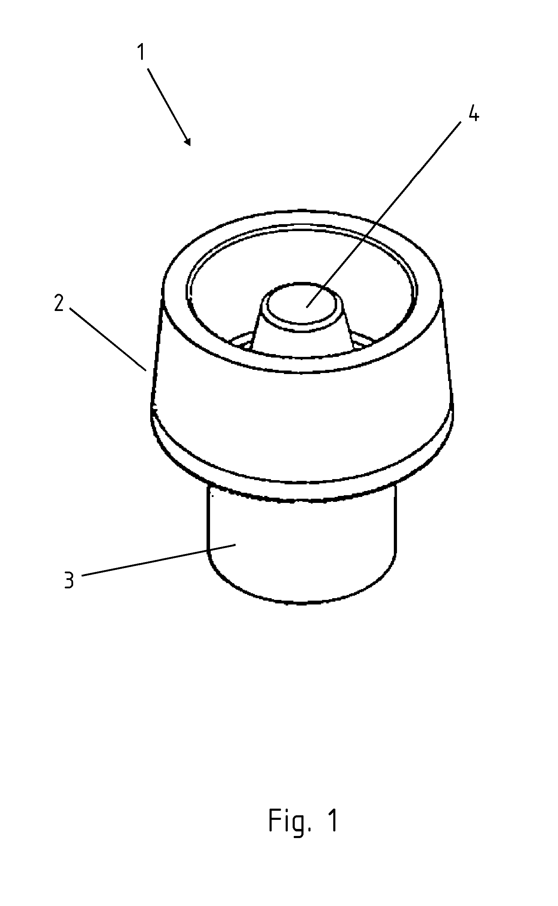

Figur 1 zeigt einen erfindungsgemäßen Elektrodenaufsatz 1 zur Verwendung an einem nicht näher dargestellten Reaktor zur Aufnahme einer ebenfalls nicht näher dargestellten Graphitelektrode. Der Elektrodenaufsatz 1 selber weist dabei einen auf die Bildebene bezogen oben dargestellten Aufsatzring 2 sowie ein darunter befindliches Sockelbauteil 3 auf. Innerhalb des Sockelbauteils ist ein Kegel 4 angeordnet.

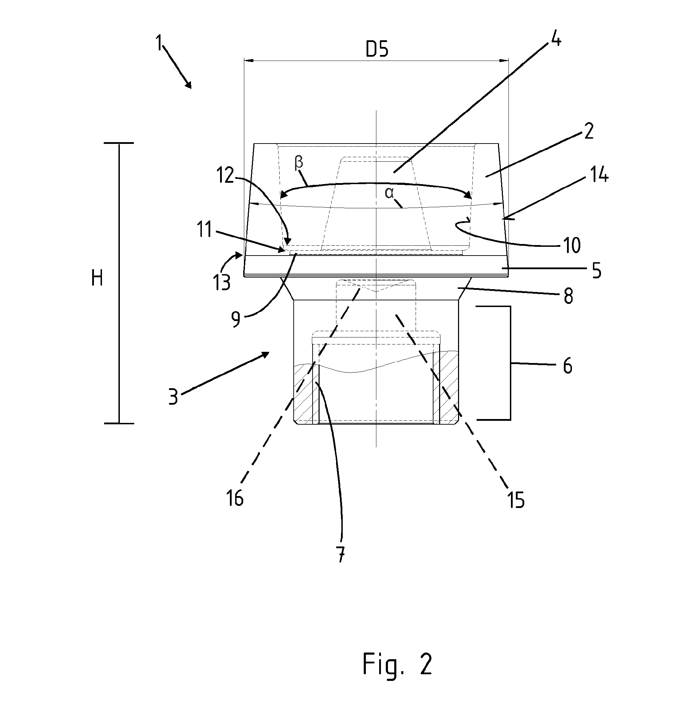

Figur 2 zeigt den Elektrodenaufsatz 1 in einer Seitenansicht mit zumindest Teilschnittdarstellung. Das Sockelbauteil 3 weist einen auf die Bildebene bezogenen oben liegenden Kegel 4 auf, wobei gefolgt von dem Kegel 4 ein Scheibenkörper 5 ausgebildet ist und auf den Scheibenkörper 5 wiederum ein Hülsenabschnitt 6 folgt. Der Kegel 4, Scheibenkörper 5 und der Hülsenabschnitt 6 selbst sind dabei einstückig und werkstoffeinheitlich miteinander gekoppelt. In dem Hülsenabschnitt 6 selbst wiederum ist auf die Bildebene bezogen von unten dargestellt ein Gewinde 7 eingearbeitet. Der Elektrodenaufsatz 1 ist insbesondere zum Einsatz in der Hochstromtechnik konzipiert. Hieraus ergeben sich bevorzugte geometrische Abmessungen des Außendurchmessers D5 des Scheibenkörpers 5 von ca. 100 mm und eine Höhe H des Bauteils von ca. 105 mm. Das Gewinde 7 selbst ist bevorzugt als M48 x 2 Gewinde ausgebildet.

Der Hülsenabschnitt 6 weitet sich trichterförmig auf und geht dabei in den Scheibenkörper 5 über. Der Scheibenkörper 5 selbst weist einen Fasenvorsprung 9 auf, der als Zentrierhilfe zum Aufsetzen des Aufsatzringes 2 selber dient. Von dem Scheibenkörper 5 aus erstreckt sich dann noch der Kegel 4 innerhalb des Aufsatzringes 2 selber. Der Aufsatzring 2 weist eine erfindungsgemäß beschichtete Innenmantelfläche 10 auf, die im Wesentlichen radial umlaufend um den Kegel 4 angeordnet ist. Nicht näher in Figur 2 dargestellt ist eine erste Schweißnaht 11 in einem Talbereich 12 zwischen Aufsatzring 2 und Kegel 4. Weiterhin nicht näher dargestellt ist eine zweite Schweißnaht 13 an der Außenmantelfläche 14 des Außenringes 2 radial umlaufend ausgebildet. Insbesondere ist die Innenmantelfläche 10 derart kegelförmig bzw. konisch verlaufend, dass sie einen Winkel β im Bereich zwischen 4° und 8°, bevorzugt 5,5° und 6,5° und insbesondere 6,0° und 6,02° aufweist.

Ferner weist die Außenmantelfläche 14 sowie ein Teil der Außenmantelfläche 14 des Scheibenkörpers 5 ebenfalls einen Kegel 4 in einem Winkel α zueinander auf, wobei dieser insbesondere zwischen 8 und 10° ganz besonders bevorzugt zwischen 9 und 9,5° liegt und entgegengesetzt zu dem Winkel β verläuft.

Weiterhin ist in einem Hohlraum 15 des Hülsenbauteils selber eine spitz zulaufende Kontur 16 ausgebildet, die einen Winkel von bevorzugt 130 bis 150° besitzt.

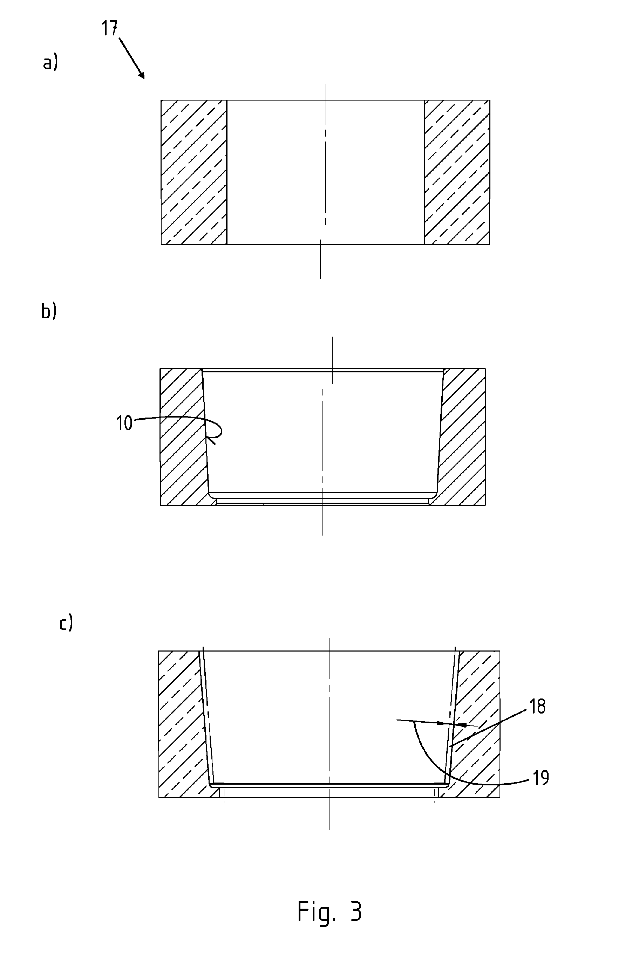

In Figur 3a bis c ist der Herstellungsprozess des Aufsatzringes 2 näher dargestellt. Zunächst wird ein in Figur 3a dargestellter Rohling 17 durch spanabhebendes Bearbeiten zu dem in Figur 3b dargestellten Zwischenbauteil bearbeitet. Insbesondere wird die Innenmantelfläche 10 hergestellt, die dann in dem in Figur 3c dargestellten Prozess mit einer Beschichtung 18 mittels thermischen Aufspritzens beschichtet wird. Die so dargestellte Beschichtung 18 gemäß Figur 3c weist ein Übermaß auf, welches im Anschluss durch weiteres mechanisches spanabhebendes Bearbeiten auf eine Sollgeometrie und mithin eine Sollschichtdicke 19 insbesondere durch Abdrehen weiter bearbeitet wird.

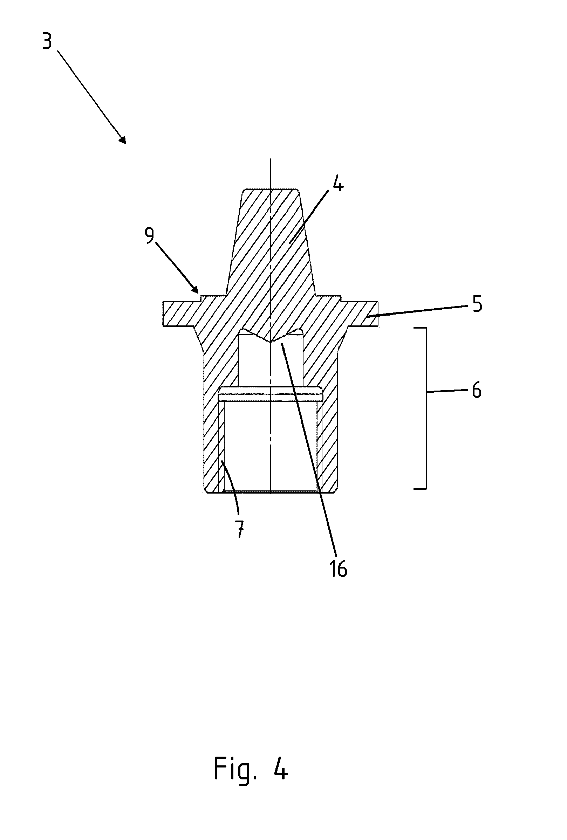

Separat wird dazu das in Figur 4 dargestellte Sockelbauteil 3 spanabhebend einstückig und werkstoffeinheitlich aus einer Kupferlegierung hergestellt. Die beiden separat voneinander hergestellten Bauteile 2, 3 werden sodann gemäß Figur 2 dargestellt miteinander gekoppelt, wobei die Außenmantelfläche 14 des Aufsatzringes 2 vor oder nach der Koppelung mit entsprechendem Kegel weitergehend bearbeitet wird. Im Anschluss daran erfolgen die zwei bereits in Figur 2 beschriebenen umlaufenden Schweißnähte 11, 13, wobei im Anschluss daran erfindungsgemäß das gesamte Bauteil galvanisch mit einer Silberlegierung beschichtet wird. Hierdurch wird dann das vollständige gemäß Figur 2 dargestellte Bauteile an allen außenliegenden Oberflächen mit einer Silberschicht überzogen, auch innerhalb der Gewindegänge des Gewindes 7.

### Bezugszeichen:

- 1 -: Elektrodenaufsatz
- 2 -: Aufsatzring
- 3 -: Sockelbauteil
- 4 -: Kegel
- 5 -: Scheibenkörper
- 6 -: Hülsenabschnitt
- 7 -: Gewinde
- 8 -: trichterförmige Aufweitung
- 9 -: Fasenvorsprung
- 10 -: Innenmantelfläche zu 2
- 11 -: erste Schweißnaht
- 12 -: Talbereich
- 13 -: zweite Schweißnaht
- 14 -: Außenmantelfläche zu 2
- 15 -: Hohlraum
- 16 -: Kontur
- 17 -: Rohling
- 18 -: Beschichtung zu 10
- 19 -: Sollschichtdicke zu 18

- D5 -: Durchmesser zu 5
- H -: Höhe
- α -: Winkel
- β -: Winkel

## Patentansprüche

1. Verfahren zum Herstellen eines Elektrodenaufsatzes (1), wobei der Elektrodenaufsatz (1) insbesondere zur Aufnahme einer Graphitelektrode verwendet wird, **gekennzeichnet durch** folgende Verfahrensschritte:
- Herstellen eines Sockelbauteils (3) und eines Aufsatzringes (2) aus einer Kupferlegierung, wobei der Aufsatzring (2) bevorzugt als zylindrisches Hohlbauteil ausgebildet wird und das Sockelbauteil (3) insbesondere als Hülsenbauteil mit gegenüber dem Hülsenbauteil abstehendem Kegel (4),
- Mechanisches Bearbeiten des Sockelbauteils (3) und des Aufsatzringes (2) zu einer gewünschten Sollgeometrie,
- Beschichten einer Innenmantelfläche (10) des Aufsatzringes (2) mit einer Silberlegierung, wobei das Beschichten **durch** ein thermisches Spritzverfahren durchgeführt wird,
- Spanabhebendes Bearbeiten der aufgespritzten Beschichtung (18) zu einer Sollgeometrie,
- Koppeln des Aufsatzringes (2) und des Sockelbauteils (3) mittels thermischem Fügen zu einem Elektrodenaufsatz (1),
- Galvanisches Oberflächenbeschichten des so hergestellten Elektrodenaufsatzes (1) mit einer Silberlegierung.

2. Verfahren nach Anspruch 1, **dadurch gekennzeichnet, dass** die Beschichtung (18) des Aufsatzringes (2) mit einer Dicke von 0,5 bis 3 mm insbesondere 1 bis 2,5 mm und bevorzugt von 1,2 bis 2,0 mm durchgeführt wird, wobei das Beschichten mittels Flammspritzen durchgeführt wird, insbesondere mittels Plasmaspritzen.

3. Verfahren nach Anspruch 2, **dadurch gekennzeichnet, dass** die Beschichtung (18) mittels eines Schneidwerkzeuges spanabhebend auf eine Sollschichtdicke (19) abgetragen wird, wobei die Sollschichtdicke (19) insbesondere zwischen 0,5 und 1,5 mm, bevorzugt zwischen 0,7 und 1,3 mm und besonders bevorzugt von 0,9 bis 1,1 mm beträgt.

4. Verfahren nach einem der vorhergehenden Ansprüche, **dadurch gekennzeichnet, dass** der Aufsatzring (2) mit einem Innenkegel an der Innenmantelfläche (10) hergestellt wird, wobei die Innenmanteloberfläche eine mittlere Rauheit von 2 bis 4 µm, insbesondere 2,5 bis 3,5 µm hergestellt wird.

5. Verfahren nach einem der vorhergehenden Ansprüche, **dadurch gekennzeichnet, dass** vor dem Beschichten der Innenmantelfläche (10) ein Haftgrund aufgetragen wird, insbesondere ein Haftgrund mit den Legierungsbestandteilen Aluminium und Nickel.

6. Verfahren nach einem der vorhergehenden Ansprüche, **dadurch gekennzeichnet, dass** das spanabhebende Verfahren an der Beschichtung (18) ohne Kühlschmierstoff durchgeführt wird.

7. Verfahren nach einem der vorhergehenden Ansprüche, **dadurch gekennzeichnet, dass** das thermische Fügen mittels eines Schweißprozesses durchgeführt wird, insbesondere mittels Elektronenstrahlschweißen.

8. Verfahren nach dem vorhergehenden Anspruch, **dadurch gekennzeichnet, dass** das thermische Fügen durch zwei Schweißnähte durchgeführt wird, wobei eine erste Schweißnaht (11) in einem Talbereich (12) des Aufsatzringes (2) mit einer Eindringtiefe von bis zu 4 mm, insbesondere bis zu 2 mm und bevorzugt bis zu 1,1 mm, durchgeführt wird und eine zweite Schweißnaht (13) in der Außenmantelfläche (14) zwischen Aufsatzring (2) und Sockelbauteil (3) mit einer Eindringtiefe von bis zu 40 mm, bevorzugt bis zu 30 mm und insbesondere zwischen 20 und 10 mm, durchgeführt wird, wobei beide Schweißnähte radial umlaufend durchgeführt werden.

9. Verfahren nach einem der vorhergehenden Ansprüche, **dadurch gekennzeichnet, dass** das Oberflächenbeschichten mit einer Schichtdicke von 10 bis 300 µm, insbesondere zwischen 30 und 200 µm und besonders bevorzugt mit einer Schichtdicke von 50 bis 100 µm erfolgt.

10. Verfahren nach einem der vorhergehenden Ansprüche, **dadurch gekennzeichnet, dass** in die Hülse des Sockelbauteils (3) ein Gewinde (7) geschnitten wird, wobei das Gewinde (7) durch das Oberflächenbeschichten mit einer Silberoberfläche überzogen wird.
